# EUROPEAN PATENT SPECIFICATION

(11) **EP 3 434 059 B1**
(45) Date of publication and mention of the grant of the patent: **05.05.2021**
(21) Application number: 17714901.0
(22) Date of filing: 21.03.2017
(51) Int. Cl.: H04W 72/12, H04W 76/27

(54) **UPLINK DATA INDICATION**
UPLINK-DATENANZEIGE
INDICATION DE DONNÉES DE LIAISON MONTANTE

(30) Priority: 21.03.2016 US 201662311222 P
(43) Date of publication of application: 30.01.2019
(73) Proprietor: Telefonaktiebolaget LM Ericsson (PUBL), 164 83 Stockholm (SE)
(72) Inventor: WITTBERG, Mikael, 753 19 Uppsala (SE); RATHONYI, Béla, 234 37 Lomma (SE); STATTIN, Magnus, 194 44 Upplands Väsby (SE)
(74) Representative: Ericsson
(86) International application number: PCT/IB2017/051641
(87) International publication number: WO 2017/163188

(56) References cited:
- WO-A1-2015/099321
- "Data Volume Indicator for NB-IOT", 3GPP DRAFT; R2-161671 DATA VOLUME INDICATOR FOR NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 14 February 2016 (2016-02-14), XP051055491, Retrieved from the Internet: URL:http://www.3gpp.org/ftp/Meetings_3GPP_ SYNC/RAN2/Docs/ [retrieved on 2016-02-14]
- "3rd Generation Partnership Project; Technical Specification Group Radio Access Network; Evolved Universal Terrestrial Radio Access (E-UTRA); Medium Access Control (MAC) protocol specification (Release 13)", 3GPP DRAFT; 36321-D00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 January 2016 (2016-01-14), XP051065229, Retrieved from the Internet: URL:http://www.3gpp.org/ftp/tsg_ran/WG2_RL 2/Specifications/201512_final_specs_after_ RAN_70/ [retrieved on 2016-01-14]

## Description

### TECHNICAL FIELD

Particular embodiments are directed to wireless communications and, more particularly, to an uplink data indication for narrowband operation.

### BACKGROUND

Third Generation Partnership Project (3GPP) long term evolution (LTE) uses a random access procedure to synchronize uplink communications between a user equipment (UE) and an enhanced Node B (eNodeB). The random access procedure includes a series of steps or messages exchanged between the UE and the eNodeB. Part of the random access procedure includes sending a Message 3 (MSG3), such as a Radio Resource Control (RRC) Connection Request message or Radio Resource Control (RRC) Connection Resume Request message.

In legacy LTE and in narrowband Internet-of-Things (NB-IoT), the size of MSG3 is relatively small to facilitate efficient coding and to facilitate good radio coverage for UEs accessing the system. In legacy LTE, the MSG3 size is typically between 56 and 72 bits. For NB-IoT, the MSG3 size may be in the range of 72 bits to 88 bits.

When a UE sends a preamble to an eNodeB in a contention-based random access procedure, the eNodeB may not know which UE sent the preamble or which procedure the UE intends to use. The eNodeB, therefore, provides a grant for MSG3 that is big enough to handle all possible common procedures in MSG3. Furthermore, at this stage of the random access procedure, the eNodeB does not have an indication of how much data or signaling the UE intends to transmit. Thus, in some situations the eNodeB may give an unnecessarily large grant in Message 5 (MSG5) for transporting the uplink request message or the eNodeB may grant additional messages, such as Message 7 (MSG7). Accordingly, the random access procedure is not optimized to efficiently process wireless devices, such as NB-IoT devices, that typically send an uplink request message followed by an optional response message, and then return to the RRC Idle state.

3GPP TSG-RAN WG2 Meeting #93, Agenda Item 7.16.2.1, "Data Volume Indicator for NB-IOT" discloses how a UE sends data volume indicator (DVI) by taking the size of uplink grant for MSG3 into account.

### SUMMARY

The invention is defined by the subject-matter of the independent claims. Particular embodiments of the invention are set out in the dependent claims.

To improve random access procedure efficiency, a wireless device such as a UE may signal to the network as soon as possible an amount of data/signaling that the UE has to transmit. If the UE transmits this information in MSG3, then an eNodeB may grant a MSG5 to the UE with a more optimal size than if this information was not available to the eNodeB.

Thus, one objective of the embodiments disclosed herein is to size MSG3 as small as possible, while also indicating how much data/signaling a UE has to transmit. Also, at the time a UE sends MSG3, some radio bearers (e.g., signaling radio bearers (SRBs) or data radio bearers (DRBs)) may not yet be setup. In conventional LTE, BSR is only reported for radio bearers that have been setup. Thus, using the legacy BSR may result in an unnecessary long time for the eNodeB to be informed about the actual data or signaling that the UE has to send.

Furthermore, conventional LTE does not include a mechanism for a UE to signal an eNodeB that, in the near future, the UE will not have any more uplink data to send and does not expect to receive any new downlink data. If the eNodeB receives information from a UE that the UE does not intend to perform any more data transmissions or receptions, then the network may quickly release or suspend the UE to RRC Idle state and thereby save network resources and minimize battery usage for the UE.

According to some embodiments, a method performed by a user equipment for indicating uplink data comprises determining a data volume indicator (DVI) representing an amount of uplink data for transmission by the user equipment and encoding the DVI in a media access control (MAC) protocol data unit (PDU). Encoding the DVI in the MAC PDU comprises encoding the DVI with a common control channel (CCCH) MAC service data unit (SDU), and encoding a logical channel identifier (LCID) value in a MAC subheader of the MAC PDU that indicates that the MAC PDU includes the CCCH MAC SDU and the DVI. The method further comprises transmitting the MAC PDU to a network node. Encoding the DVI in the MAC PDU does not include encoding a MAC subheader for the DVI only.

In particular embodiments, encoding the DVI in the MAC subheader may comprise setting the F2 bit to indicate the MAC subheader includes the DVI. The F2 bit may indicate the MAC subheader includes the DVI when the user equipment receives an uplink grant less than a threshold number of bytes. Encoding the DVI in the MAC subheader may comprise setting the R bit to indicate the MAC subheader includes the DVI.

In particular embodiments, the DVI comprises 4 bits or less. The DVI may relate to a logical channel indicated by the MAC subheader, to all logical channels for which the user equipment has uplink data for transmission, or the DVI may include an amount of data for transmission associated with logical channels that are not setup.

In particular embodiments, the DVI indicates that the user equipment has no uplink data to transmit within a particular time period. The particular time period may correspond to a discontinuous reception (DRX) cycle.

According to some embodiments, a method performed by a network node for receiving an uplink data indication comprises receiving a media access control (MAC) protocol data unit (PDU) from a user equipment. The MAC PDU includes a data volume indicator (DVI) representing an amount of uplink data for transmission by the user equipment. The method further comprises decoding the DVI in the MAC PDU. Decoding the DVI in the MAC PDU comprises decoding the DVI along with a common control channel (CCCH) MAC service data unit (SDU), and decoding a logical channel identifier (LCID) value in a MAC subheader that indicates that the MAC PDU includes a CCCH MAC SDU. The method further comprises transmitting an uplink grant to the user equipment based on the decoded DVI. Decoding the DVI in the MAC PDU does not include decoding a MAC subheader for the DVI only.

In particular embodiments, decoding the DVI in the MAC subheader may comprise inspecting the F2 bit to determine the MAC subheader includes the DVI. The F2 bit may indicate whether the MAC subheader includes the DVI when the user equipment receives an uplink grant less than a threshold number of bytes. Decoding the DVI in the MAC subheader may comprise inspecting a value of the R bit to determine the MAC subheader includes the DVI.

In particular embodiments, the DVI comprises 4 bits or less. The DVI may relate to a logical channel indicated by the MAC subheader, to all logical channels for which the user equipment has uplink data for transmission, or the DVI includes an amount of data for transmission associated with logical channels that are not setup.

In particular embodiments, the DVI indicates that the user equipment has no uplink data to transmit within a particular time period. The particular time period may correspond to a discontinuous reception (DRX) cycle.

According to some embodiments, a user equipment comprises processing circuitry operable to: determine a data volume indicator (DVI) representing an amount of uplink data for transmission by the user equipment; and encode the DVI in a media access control (MAC) protocol data unit (PDU). The DVI is encoded in the MAC PDU by encoding the DVI with a common control channel (CCCH) MAC service data unit (SDU) and encoding a logical channel identifier (LCID) value in a MAC subheader of the MAC PDU that indicates that the MAC PDU includes the CCCH MAC SDU and the DVI. The user equipment further comprises a transceiver operable to transmit the MAC PDU to a network node.

According to some embodiments, a network node comprises processing circuitry operable to receive a media access control (MAC) protocol data unit (PDU) from a user equipment. The MAC PDU includes a data volume indicator (DVI) representing an amount of uplink data for transmission by the user equipment. The processing circuitry is further operable to decode the DVI in the MAC PDU. The DVI in the MAC PDU is decoded by decoding the DVI along with a common control channel (CCCH) MAC service data unit (SDU) and decoding a logical channel identifier (LCID) value in a MAC subheader that indicates that the MAC PDU includes a CCCH MAC SDU. The network node further comprises a processor operable to transmit an uplink grant to the user equipment based on the decoded DVI.

According to some embodiments, a user equipment comprises a determining module, an encoding module, and a transmitting module. The determining module is operable to determine a data volume indicator (DVI) representing an amount of uplink data for transmission by the user equipment. The encoding module is operable to encode the DVI in a media access control (MAC) protocol data unit (PDU), wherein the DVI is encoded in the MAC PDU by encoding the DVI with a common control channel (CCCH) MAC service data unit (SDU) and encoding a logical channel identifier (LCID) value in a MAC subheader of the MAC PDU that indicates that the MAC PDU includes the CCCH MAC SDU and the DVI. The transmitting module is operable to transmit the MAC PDU to a network node.

According to some embodiments, a network node comprises a receiving module, a decoding module, and a transmitting module. The receiving module is operable to receive a media access control (MAC) protocol data unit (PDU) from a user equipment. The MAC PDU includes a data volume indicator (DVI) representing an amount of uplink data for transmission by the user equipment. The decoding module is operable to decode the DVI in the MAC PDU. The DVI in the MAC PDU is decoded by decoding the DVI along with a common control channel (CCCH) MAC service data unit (SDU) and decoding a logical channel identifier (LCID) value in a MAC subheader that indicates that the MAC PDU includes a CCCH MAC SDU. The transmitting module is operable to transmit the uplink grant to the user equipment.

Also disclosed is a computer program product. The computer program product comprises instructions stored on non-transient computer-readable media which, when executed by a processor, perform the acts of determining a data volume indicator (DVI) representing an amount of uplink data for transmission by the user equipment and encoding the DVI in a media access control (MAC) protocol data unit (PDU). Encoding the DVI in the MAC PDU comprises encoding the DVI with a common control channel (CCCH) MAC service data unit (SDU), and encoding a logical channel identifier (LCID) value in a MAC subheader of the MAC PDU that indicates that the MAC PDU includes the CCCH MAC SDU and the DVI. The instructions further perform the act of transmitting the MAC PDU to a network node.

Another computer program product comprises instructions stored on non-transient computer-readable media which, when executed by a processor, perform the act of receiving a media access control (MAC) protocol data unit (PDU) from a user equipment. The MAC PDU includes a data volume indicator (DVI) representing an amount of uplink data for transmission by the user equipment. The instructions further perform the act of decoding the DVI in the MAC PDU. Decoding the DVI in the MAC PDU comprises decoding the DVI along with a common control channel (CCCH) MAC service data unit (SDU), and decoding a logical channel identifier (LCID) value in a MAC subheader that indicates that the MAC PDU includes a CCCH MAC SDU. The instructions further perform the act of transmitting an uplink grant to the user equipment based on the decoded DVI.

Particular embodiments may exhibit some of the following technical advantages. Particular embodiments may facilitate a smaller sized MSG3 transport block while also supporting efficient uplink scheduling. Particular embodiments may facilitate a UE to signal an amount of uplink data/signaling that the UE has to transmit, including data/signaling for radio bearers that have not yet been setup. This results in more efficient scheduling which conserves radio resources. Particular embodiments use a smaller uplink grant in general for any uplink transmission, which conserves radio resources. Particular embodiments enable an eNodeB to better know when to keep a UE in RRC connected state or when to release the UE to RRC idle state. This may conserve radio resources and conserve UE battery usage. Other technical advantages will be readily apparent to one skilled in the art from the following figures, description and claims.

### BRIEF DESCRIPTION OF THE DRAWINGS

For a more complete understanding of the embodiments and their features and advantages, reference is now made to the following description, taken in conjunction with the accompanying drawings, in which:
FIGURE 1 is a block diagram illustrating an example wireless network, according to a particular embodiment;
FIGURE 2 illustrates a block diagram of an example message structure including an LCID for a combined short BSR and a CCCH;
FIGURE 3 illustrates a block diagram of an example message structure of a MAC subheader;
FIGURE 4 illustrates a block diagram of another example message structure of a MAC subheader;
FIGURE 5A is a flow diagram of an example method in a user equipment of communicating a data volume indicator, according to some embodiments;
FIGURE 5B is a flow diagram of an example method in a user equipment of communicating a buffer status report, according to some embodiments;
FIGURE 6A is a flow diagram of an example method in a network node of receiving a data volume indicator, according to some embodiments;
FIGURE 6B is a flow diagram of an example method in a network node of receiving a buffer status report, according to some embodiments;
FIGURE 7A is a block diagram illustrating an example embodiment of a wireless device;
FIGURE 7B is a block diagram illustrating example components of a wireless device;
FIGURE 8A is a block diagram illustrating an example embodiment of a network node; and
FIGURE 8B is a block diagram illustrating example components of a network node.

### DETAILED DESCRIPTION

To improve random access procedure efficiency, a user equipment (UE) may signal to the network as soon as possible an amount of data/signaling that the UE has to transmit. If the UE transmits this information in MSG3, then an eNodeB may grant a MSG5 to the UE with a more optimal size than if this information was not available to the eNodeB. For example, in many scenarios a narrowband internet of things (NB-IoT) UE may send an uplink request message followed by an optional response message, and then go back to radio resource control (RRC) Idle state. If accurate uplink data/signaling information is available to the eNodeB in MSG3, then for many scenarios the eNodeB may send a grant for a MSG5 for carrying the uplink request message. Without such information, the eNodeB may grant an unnecessarily large MSG5, or the eNodeB may grant another message in MSG7 (message numbers counted in the normal way after a random access procedure has been executed), both of which are inefficient.

Thus, one objective of the embodiments disclosed herein is to size MSG3 as small as possible, while also indicating how much data/signaling a UE has to transmit. Using a buffer status report (BSR) media access control (MAC) control element (CE) for carrying the uplink data/signaling volume uses at least 2 bytes (MAC subheader plus MAC control element). In many cases, 2 bytes extra in MSG3 is too much, and the BSR may potentially not fit in MSG3 for certain procedures in NB-IoT.

At the time a UE sends MSG3, some radio bearers (e.g., signaling radio bearers (SRBs) or data radio bearers (DRBs)) may not yet be setup. In conventional LTE, BSR is only reported for radio bearers that have been setup. Thus, using the legacy BSR may result in an unnecessary long time for the eNodeB to be informed about the actual data or signaling that the UE has to send.

Furthermore, conventional LTE does not include a mechanism for a UE to signal an eNodeB that, in the near future, the UE will not have any more uplink data to send and does not expect to receive any new downlink data. The BSR MAC control element only provides information about what the UE wants to transmit in uplink at the moment when the BSR is sent. If the eNodeB receives information from a UE that the UE does not intend to perform any more data transmissions or receptions, then the network may quickly release or suspend the UE to RRC Idle state and thereby save network resources and minimize battery usage for the UE.

Particular embodiments alleviate the disadvantages described above by improving the current mechanism for how a UE reports to a network the amount of uplink signaling/data that the UE has to transmit. For example, the network may efficiently schedule a NB-IoT UE to optimize radio resource usage and avoid unnecessary uplink transmissions.

With respect to the embodiments described herein, the term data volume indicator (DVI) may refer to a general mechanism used to report the uplink data or signaling volume that a UE has to send. Particular embodiments describe how a UE may send DVI information to the network using MSG3 or in other uplink messages. In particular embodiments, the DVI may be encoded such that it uses less memory than a traditional BSR MAC control element.

According to some embodiments, a method to decrease BSR size when the BSR is transmitted at the same time as a Common Control Channel (CCCH) MAC Service Data Unit (SDU) includes using a specific Logical Channel Identifier (LCID) value that indicates both the CCCH SDU and the BSR is included. This saves one MAC subheader and thus one byte. Using a specific LCID for this specific combination is efficient because the combination is commonly used when sending MSG3.

According to other embodiments, a method for sending the DVI includes sending the DVI in a MAC subheader. Particular embodiments may include the DVI using the spare R bit or the F2 bit in a conventional MAC header. For example, if the chosen bit is set to 1, the DVI information may be included within the LCID field of the MAC subheader (5 bits), either using the complete field or using parts of the field. If the complete LCID field is used for the DVI and possible spare bits, then the R or F2 bit may also be used to indicate a specific LCID, such as 0 (binary: 00000) indicating a CCCH MAC SDU. When parts of the LCID field are used for the DVI information, the remaining bits may be used for indicating an existing LCID, but using a smaller value range.

Particular embodiments may use the DVI or the BSR to indicate that the UE has no more data to transmit or receive within the near future. The duration of "near future" may vary in various embodiments. For example, particular embodiments may enable the UE to determine an acceptable duration, or the duration may be based on the length of the long connected or idle mode discontinuous reception (DRX) cycle. The eNodeB may use this information to decide whether the UE should stay in RRC connected state or whether the UE should be released or suspended to RRC Idle state.

Particular embodiments may provide one or more technical advantages. For example, particular embodiments may enable a smaller sized MSG3 transport block while also supporting efficient uplink scheduling. Particular embodiments may enable a UE to signal an amount of uplink data/signaling that the UE has to transmit, including data/signaling for radio bearers that have not yet been setup. This results in more efficient scheduling which conserves radio resources. Particular embodiments use a smaller uplink grant in general for any uplink transmission, which conserves radio resources. Particular embodiments enable to an eNodeB to better know when to keep a UE in RRC connected state or when to release or suspend the UE to RRC idle state. This may conserve radio resources and conserve UE battery usage.

The following description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

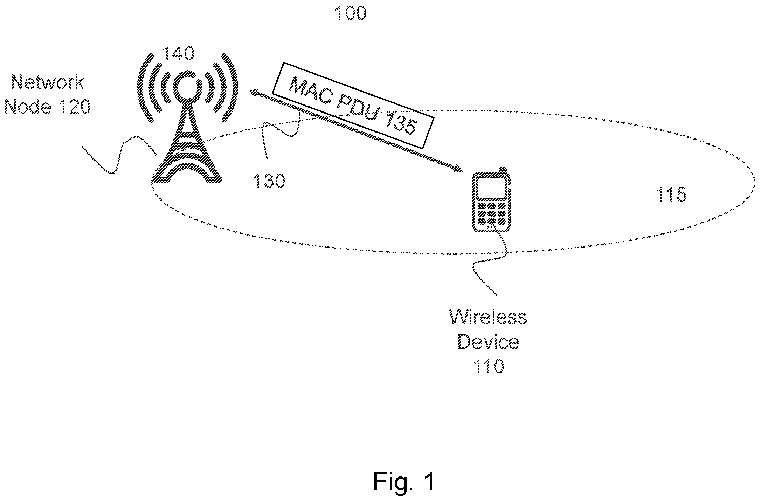

Particular embodiments are described with reference to FIGURES 1-8B of the drawings, like numerals being used for like and corresponding parts of the various drawings. LTE is used throughout this disclosure as an example cellular system, but the ideas presented herein may apply to other wireless communication systems as well.

FIGURE 1 is a block diagram illustrating an example wireless network, according to a particular embodiment. Wireless network 100 includes one or more wireless devices 110 (such as mobile phones, smart phones, laptop computers, tablet computers, MTC devices, NB-IoT devices, or any other devices that can provide wireless communication) and a plurality of network nodes 120 (such as base stations or eNodeBs). Network node 120 serves coverage area 115 (also referred to as cell 115).

In general, wireless devices 110 that are within coverage of network node 120 (e.g., within cell 115 served by network node 120) communicate with network node 120 by transmitting and receiving wireless signals 130. For example, wireless devices 110 and network node 120 may communicate wireless signals 130 containing voice traffic, data traffic, and/or control signals. A network node 120 communicating voice traffic, data traffic, and/or control signals to wireless device 110 may be referred to as a serving network node 120 for the wireless device 110.

In some embodiments, wireless device 110 may be referred to by the non-limiting term "UE." A UE may include any type of wireless device capable of communicating with a network node or another UE over radio signals. The UE may comprise radio communication device, target device, device to device (D2D) UE, machine type UE or UE capable of machine to machine communication (M2M), a sensor equipped with UE, iPAD, Tablet, mobile terminals, smart phone, laptop embedded equipped (LEE), laptop mounted equipment (LME), USB dongles, Customer Premises Equipment (CPE), NB-IoT device, etc.

In some embodiments, network node 120 may include any type of network node such as a base station, radio base station, base transceiver station, base station controller, network controller, evolved Node B (eNB), Node B, multi-RAT base station, Multi-cell/multicast Coordination Entity (MCE), relay node, access point, radio access point, Remote Radio Unit (RRU) Remote Radio Head (RRH), a core network node (e.g., MME, SON node, a coordinating node, etc.), or even an external node (e.g., 3rd party node, a node external to the current network), etc.

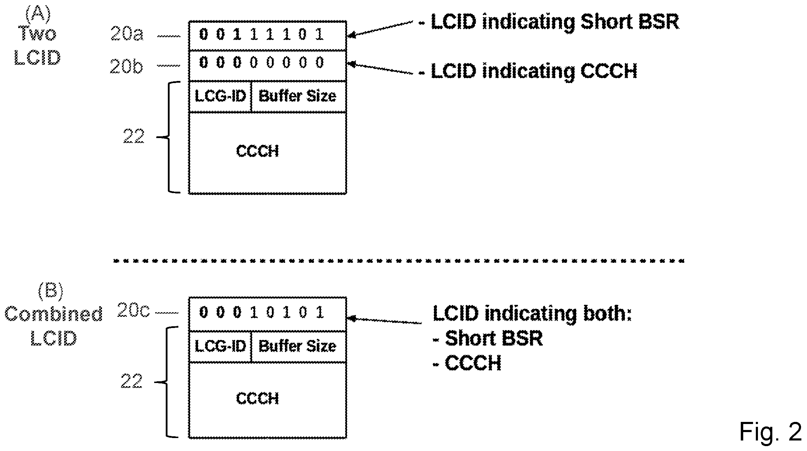

Wireless signals 130 may include both downlink transmissions (from radio network node 120 to wireless devices 110) and uplink transmissions (from wireless devices 110 to radio network node 120). Wireless signals 130 may include data packets, such as media access control (MAC) protocol data units (PDUs) 135. In particular embodiments, MAC PDU 135 may include the formats described with respect to FIGURES 2-4.

Wireless device 110 may use a random access procedure to synchronize uplink transmissions with network node 120. The random access procedure may include sending a MSG3, such as a Radio Resource Control (RRC) Connection Request.

In particular embodiments, wireless device 110 may determine an amount of uplink data for transmission by wireless device 100. Wireless device 110 may determine a data volume indicator (DVI) representing the determined amount of uplink data and encode the DVI in MAC PDU 135 using less than one byte. Wireless device 110 may transmit MAC PDU 135 to network node 120. The processing circuitry is further operable to encode the DVI in the MAC PDU by including the DVI with a common control channel (CCCH) MAC service data unit (SDU). For example, wireless device 110 may encode the DVI in the MAC PDU by including the DVI with a common control channel (CCCH) MAC service data unit (SDU).

In particular embodiments, network node 120 may receive a MAC PDU 135 from wireless device 110. MAC PDU 135 may include a DVI representing an amount of uplink data for transmission by wireless device 110 and the DVI may be encoded using less than one byte. Network node 120 may decode the DVI in the MAC PDU, determine an uplink grant based on the decoded DVI, and transmit the uplink grant to wireless device 110. Network node 120 may decode the DVI in the MAC PDU by decoding the DVI along with a CCCH MAC SDU.

Each network node 120 may have a single transmitter or multiple transmitters for transmitting signals 130 to wireless devices 110. In some embodiments, network node 120 may comprise a multi-input multi-output (MIMO) system. Similarly, each wireless device 110 may have a single receiver or multiple receivers for receiving signals 130 from network nodes 120.

In wireless network 100, each radio network node 120 may use any suitable radio access technology, such as long term evolution (LTE), LTE-Advanced, UMTS, HSPA, GSM, cdma2000, WiMax, WiFi, and/or other suitable radio access technology. Wireless network 100 may include any suitable combination of one or more radio access technologies. For purposes of example, various embodiments may be described within the context of certain radio access technologies. However, the scope of the disclosure is not limited to the examples and other embodiments could use different radio access technologies.

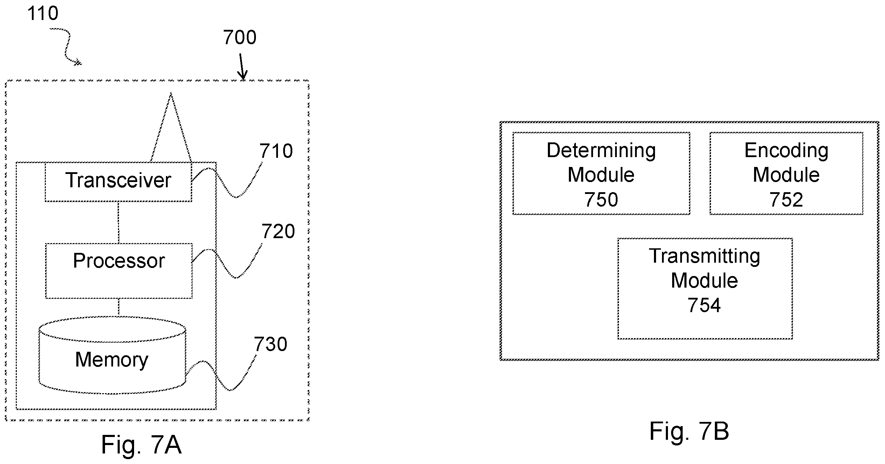

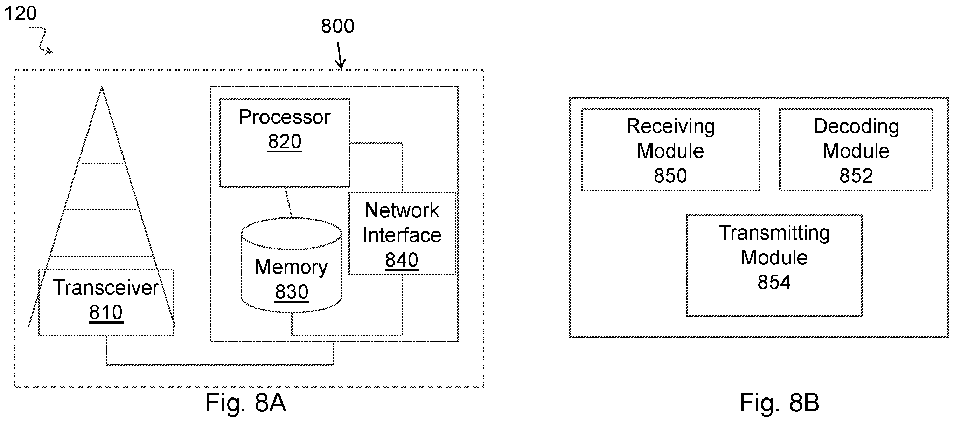

As described above, embodiments of a wireless network may include one or more wireless devices and one or more different types of radio network nodes capable of communicating with the wireless devices. The network may also include any additional elements suitable to support communication between wireless devices or between a wireless device and another communication device (such as a landline telephone). A wireless device may include any suitable combination of hardware and/or software. For example, in particular embodiments, a wireless device, such as wireless device 110, may include the components described below with respect to FIGURE 7A. Similarly, a network node may include any suitable combination of hardware and/or software. For example, in particular embodiments, a network node, such as network node 120, may include the components described below with respect to FIGURE 8A.

According to some embodiments, wireless device 110 may include a mechanism to inform network node 120 about how much uplink data/signaling that wireless device 110 has to transmit. Particular embodiments may combine the CCCH MAC SDU and the BSR MAC control element using one MAC subheader for the pair. The combined pair may be identified by an LCID value. In some embodiments, an LCID value may be allocated from the set of available values. An advantage of these embodiments is that they use 1 byte of overhead, instead of 2 bytes if using the legacy BSR MAC control element by itself.

FIGURE 2 illustrates a block diagram of an example message structure including an LCID for a combined short BSR and a CCCH. Message structure (A) includes two MAC subheaders 20 and a service data unit (SDU) 22. MAC subheader 20a includes an LCID that identifies the Short BSR included in SDU 22, and MAC subheader 20b includes an LCID that identifies the CCCH included in SDU 22.

Message structure (B) includes a single MAC subheader 20 with a single LCID and a service data unit 22. MAC subheader 20c includes an LCID that identifies the combined short BSR and CCCH included in SDU 22. Although a particular LCID value (i.e., 10101) is illustrated, particular embodiments may use any suitable LCID value (i.e., any value between 00000 and 11111).

Message structure (B) illustrates how one MAC subheader can be used to include both a CCCH MAC SDU and a BSR MAC control element. Particular embodiments may include the combined LCID as well as conventional LCID values. A wireless device, such as wireless device 110, may use the combined LCID value when sending both a CCCH SDU and a BSR in the same MAC PDU. The illustrated example depicts the CCCH and short BSR in a particular order, but other embodiments may include the CCCH and short BSR in any suitable order.

The term "short BSR" used with respect to the combined CCCH MAC SDU and a BSR MAC control element refers to any suitable form of buffer status indicator, such as a data volume indicator. The term "short BSR" in this context is not limited to the short BSR as defined in 3GPP TS 36.321 Sections 6.1.3 and 6.2.1.

Other embodiments may include the DVI value in the MAC subheader. For example, field R or F2 of the MAC subheader may indicate whether the DVI is included. The DVI may be included as part of the LCID field.

In particular embodiments, a wireless device sets the F2 field to 1 to indicate that the MAC subheader contains a DVI field (e.g., 3 or 4 bits) and a smaller LCID field (e.g., 1 or 2 bits). In particular embodiments, the number of bits for the resulting LCID field and the DVI field may vary from the examples described herein.

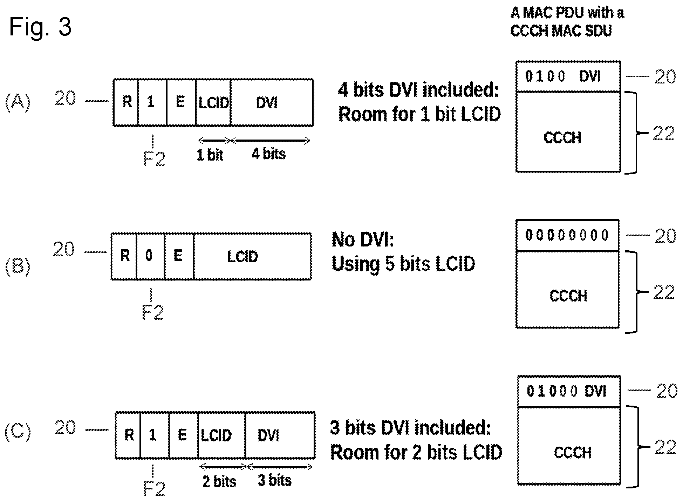

FIGURE 3 illustrates a block diagram of an example message structure of a MAC subheader. The F2 field in MAC subheader 20 together with the LCID field encodes the DVI. In particular embodiments, a 3 or 4 bit DVI may be included in MAC subheader 20 for a CCCH SDU, and an LCID field of 2 or 1 bits is supported.

In example (A), MAC subheader 20 includes an F2 field set to 1 in conjunction with a 4 bit DVI and a 1 bit LCID. In example (B), MAC subheader 20 includes an F2 field set to 0 in conjunction with no DVI and a 5 bit LCID. In example (C), MAC subheader 20 includes an F2 field set to 1 in conjunction with a 3 bit DVI and a 2 bit LCID.

In particular embodiments, a wireless device such as wireless device 110 sets the F2 field to 1 to indicate that the MAC subheader contains a DVI using the complete LCID field or parts of the LCID field. The remaining part of the LCID field may be used as spare.

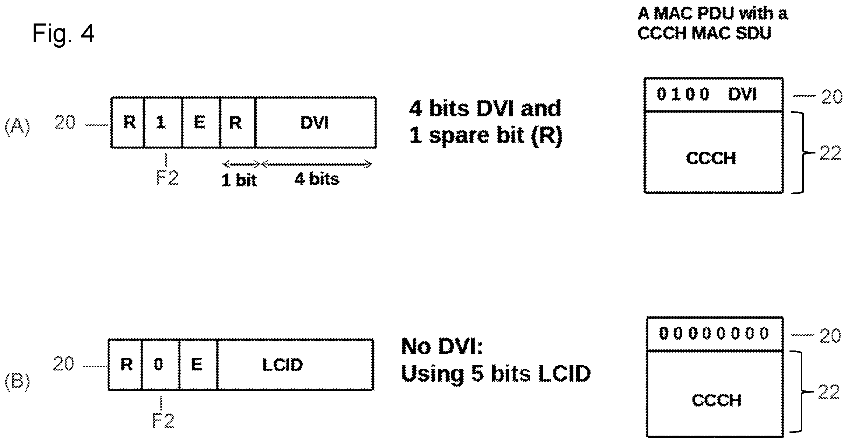

FIGURE 4 illustrates a block diagram of another example message structure of a MAC subheader. The F2 field in MAC subheader 20 is used together with the LCID field to encode the DVI. In particular embodiments, a 4 bit DVI may be included in the MAC subheader for a CCCH SDU. No LCID field is used when the F2 field is set to 1.

Example (A) illustrates the F2 field set to 1 in conjunction with a 4 bit DVI and 1 spare bit. Example (B) illustrates the F2 field set to 0 in conjunction with no DVI and a 5 bit LCID. A particular advantage of this embodiment is that DVI information may be included using zero bits of overhead.

Particular embodiments may combine the examples described with respect to FIGURES 3 and 4. For example, particular embodiments may use the example described with respect to FIGURE 4 when sending MSG3, and use the example described with respect to FIGURE 3 otherwise. The combination is possible because both the wireless device and the network node are aware of when MSG3 is transmitted based on the grant given in MSG2.

A particular advantage of this combination is that more information may be included in MSG3 because all 5 bits are available for the DVI and spare. The spare bits may be used for signaling other types of information. When MSG3 is not sent, then a wireless device may use the format described with respect to FIGURE 3. For example, the wireless device may indicate a specific LCID with 1 or 2 bits. An advantage is that this format may be used when sending logical channels other than the CCCH channel.

Particular embodiments may include rules to specify how a wireless device with buffered uplink data/signaling reports the DVI. For example, in particular embodiments the indicated uplink buffer volume refers to the logical channel indicated by the MAC subheader. As another example, the indicated uplink buffer volume may refer to all logical channels for which the wireless device has uplink data/signaling. As yet another example, the indicated uplink buffer volume may refer to any uplink data/signaling that the wireless device has to transmit, including data/signaling for logical channels that have not yet been setup.

Particular embodiments may apply to both NB-IoT and conventional LTE. For example, using the F2 field for the DVI in NB-IoT is possible because conventional LTE usage, which indicates MAC SDUs greater than 32767 bytes in size, may not be needed for NB-IoT.

Particular embodiments that use the F2 field for conventional LTE, however, may distinguish the conventional usage of the F2 field and the usage for DVI. For example, in conventional LTE, the MAC standard in 3GPP TS 36.321 Section 6.2.1 specifies that the size of the F2 field is 1 bit and that the F2 bit is set when the following condition is true: if the size of the MAC SDU or variable-sized MAC control element is larger than 32767 bytes and if the corresponding subheader is not the last subheader, the value of the F2 field is set to 1, otherwise it is set to 0.

In conventional LTE, the wireless device will not set the F2 field when it is given a grant smaller than 32767 bytes. Particular embodiments may use the following rules to distinguish between DVI and conventional usage. For example, if a wireless device is given a grant less than 32767 bytes, the F2 field may be used to indicate a DVI field in the MAC subheader, otherwise the F2 field may be used conventionally.

In particular embodiments, DVI may not be used when using large transport blocks. Large transport blocks, however, may be rarely used and the F2 field can be used for DVI most of the time. For the rare times when large transport blocks are scheduled and DVI cannot be used, in particular embodiments a wireless device may include a conventional BSR. In this situation, including the BSR results in small overhead compared to the large MAC PDU.

According to some embodiments, a wireless device may use a DVI or a BSR to indicate that within the "near future" the wireless device has no more uplink data/signaling to send and it does not expect to receive any data/signaling in the downlink. A wireless device may indicate this using any of the following examples.

In particular embodiments, a wireless device may use the DVI field to indicate that within the near future it has no more uplink data/signaling to transmit and does not expect to receive any downlink data/signaling. For example, the wireless device may use a specific value (e.g. 0) in the DVI field. As another example, the wireless device may not include the DVI field in the MAC subheader (e.g., specified by not setting the R or the F2 bit field) for a MAC SDU that would otherwise support a DVI (e.g., the range of the LCID field includes the logical channel for this MAC SDU when the DVI field is included).

In particular embodiments, a wireless device may use a BSR MAC control element, to indicate that within the near future it has no more uplink data/signaling to transmit and does not expect to receive any downlink data/signaling. For example, a wireless device may include a BSR with a buffer size set to 0 (or any other special value). As another example, a NB-IoT wireless device may include a BSR in all uplink MAC PDUs, except when the NB-IoT wireless device has no more uplink data/signaling to transmit. If a NB-IoT wireless device has not included a BSR in a MAC PDU, then the NB-IoT wireless device has no more uplink/downlink data/signaling within the near future.

In particular embodiments, the time period referred to by "near future" may be determined by a particular wireless device, or it may be based on any of the following time intervals. In particular embodiments, near future may refer to the time period for the following X long connected mode DRX cycle periods, where X may be any integer value greater than or equal to 1. Particular embodiments may use RRC idle mode DRX cycle instead. In particular embodiments, near future may refer to a fixed time period or it may be configured by the network.

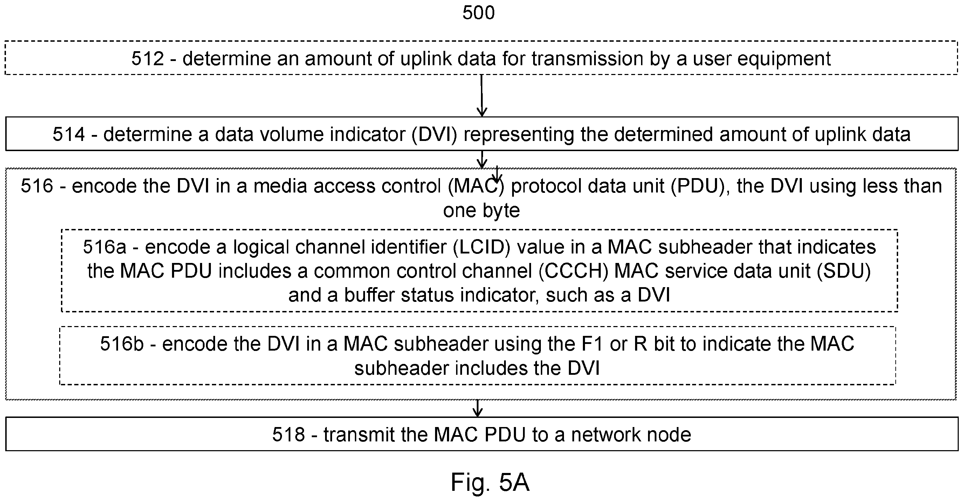

Particular embodiments include methods performed by a wireless device and other embodiments include methods performed by a network node. Example methods are described with respect to FIGURES 5A-6B.

FIGURE 5A is a flow diagram of an example method 500 in a user equipment of communicating a data volume indicator. In particular embodiments, one or more steps of method 500 may be performed by components of wireless network 100 described with reference to FIGURES 1-8B.

Method 500 begins at step 512, where a user equipment determines an amount of uplink data for transmission by the user equipment. For example, wireless device 110 may determine that is has 50 bytes of data to uplink. Wireless device 110 may comprise a NB-IoT device that typically transmits a small amount of data and transmits infrequently.

At step 514, the user equipment determine a data volume indicator (DVI) representing the determined amount of uplink data. For example, a 4 bit DVI may include 16 index values. Each index value may refer to a range of data sizes. Wireless device 110 may determine a 4 bit index value that refers to a data size range that includes 50 bytes of uplink data. Particular embodiments may include a DVI of any suitable number of bits (e.g., 1, 2, 3, 4, 5, etc.).

In some embodiments, the wireless device may not have any more uplink data to transmit. The wireless device may use a DVI set to 0 (or any predetermined value) to indicate to the network node that the wireless device does not have any more data to transmit in the near future. The network node may use the indication to release or suspend the wireless device to an RRC Idle state.

At step 516, the user equipment encodes the DVI in a media access control (MAC) protocol data unit (PDU). The user equipment encodes the DVI using less than one byte. In some embodiments, the user equipment may encode the DVI with a common control channel (CCCH) MAC service data unit (SDU). For example, in step 516a the user equipment encodes a logical channel identifier (LCID) value in a MAC subheader that indicates the MAC PDU includes a CCCH MAC SDU and a buffer status indicator, such as a DVI. As a particular example, wireless device 110 may encode the DVI according the example described with respect to FIGURE 2 example (B).

In some embodiments, the user equipment may encode the DVI in a MAC subheader. For example, in step 516b the user equipment uses the F1 or R bit to indicate the MAC subheader includes the DVI. As a particular example, wireless device 110 may encode the DVI according to any of the examples described with respect to FIGURES 3 and 4.

To conserve bits in the uplink message, the embodiments described herein either combine the DVI with a CCCH or embed the DVI in the MAC subheader. As described above, encoding a specific MAC subheader for the DVI would require at least two bytes (i.e., one byte MAC subheader plus one byte for the DVI), which may be inefficient for a NB-IoT device. Thus, the embodiments described herein are more efficient than a dedicated MAC subheader for the DVI only.

At step 518, the user equipment transmits the MAC PDU to a network node. For example, wireless device 110 may transmit the MAC PDU to network node 120.

Modifications, additions, or omissions may be made to method 500 illustrated in FIGURE 5A. For example, particular embodiments may omit step 512. Additionally, one or more steps in method 500 may be performed in parallel or in any suitable order.

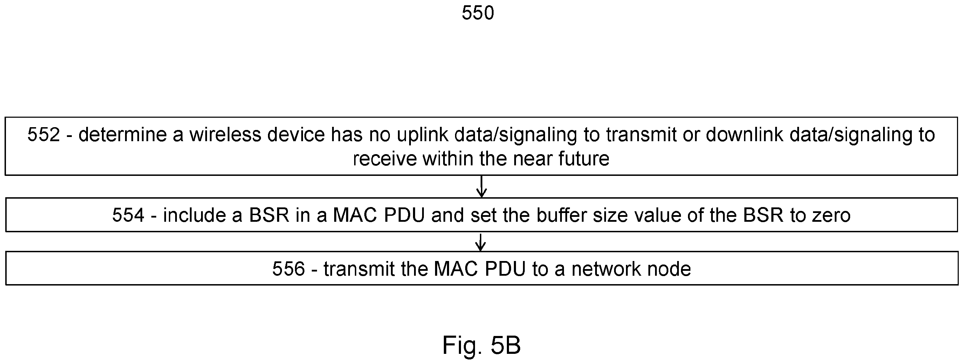

FIGURE 5B is a flow diagram of an example method in a user equipment of communicating a buffer status report, according to some embodiments. In particular embodiments, one or more steps of method 550 may be performed by components of wireless network 100 described with reference to FIGURES 1-8B .

Method 550 begins at step 552, where a wireless device determines that is has no uplink data/signaling to transmit or downlink data/signaling to receive within the near future. For example, wireless device 110 may determine that is has no uplink data/signaling to transmit or downlink data/signaling to receive within the near future. Wireless device 110 may comprise a NB-IoT device that typically transmits a small amount of data and transmits infrequently.

At step 552, the wireless device may include a BSR in a MAC PDU and set the buffer size of the BSR to zero.

At step 554, the wireless device transmits the MAC PDU to a network node. For example, as part of a random access procedure or any scheduled UL transmission, wireless device 110 may send a message including the MAC PDU to network node 120.

Modifications, additions, or omissions may be made to method 550 illustrated in FIGURE 5B. Additionally, one or more steps in method 550 may be performed in parallel or in any suitable order.

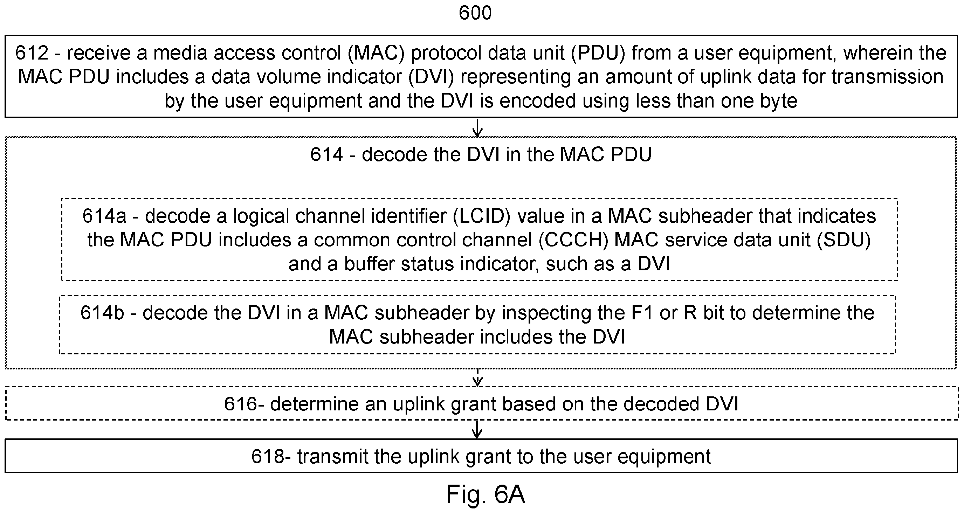

FIGURE 6A is a flow diagram of an example method in a network node of receiving a data volume indicator. In particular embodiments, one or more steps of method 600 may be performed by components of wireless network 100 described with reference to FIGURES 1-8B.

Method 600 begins at step 612, where a network node receives a media access control (MAC) protocol data unit (PDU) from a user equipment. The MAC PDU includes a data volume indicator (DVI) representing an amount of uplink data for transmission by the wireless device and the DVI is encoded using less than one byte. For example, as part of a random access procedure, network node 120 may receive, from wireless device 110, a message that includes a MAC PDU that includes a DVI indicating the wireless device 110 has 50 bytes of data to transmit.

At step 614, the network node decodes the DVI in the MAC PDU. In some embodiments decoding the DVI includes decoding the DVI along with a common control channel (CCCH) MAC service data unit (SDU). For example, in step 614a the network node decodes a logical channel identifier (LCID) value in a MAC subheader that indicates the MAC PDU includes a common control channel (CCCH) MAC service data unit (SDU) and a buffer status indicator, such as a DVI. As a particular example, network node 120 may decode the DVI according the example described with respect to FIGURE 2 example (B).

In some embodiments, the network node decodes the DVI in a MAC subheader. For example, in step 614b the network node inspects the F1 or R bit to determine the MAC subheader includes the DVI. As a particular example, network node 120 may decode the DVI according to any of the examples described with respect to FIGURES 3 and 4.

At step 616, the network node determines an uplink grant based on the decoded DVI. For example, network node 120 may determine that the DVI includes an index that indicates wireless device 110 has 50 bytes of data (or a range of data that includes 50 bytes) to transmit. Network node 110 creates an uplink grant that grants enough resources to accommodate the 50 bytes of uplink data.

At step 618, the network node transmits the uplink grant to the user equipment. For example, network node 230 may transmit the uplink grant to wireless device 110.

Modifications, additions, or omissions may be made to method 600 illustrated in FIGURE 6A. For example, particular embodiments may omit step 616. Additionally, one or more steps in method 600 may be performed in parallel or in any suitable order.

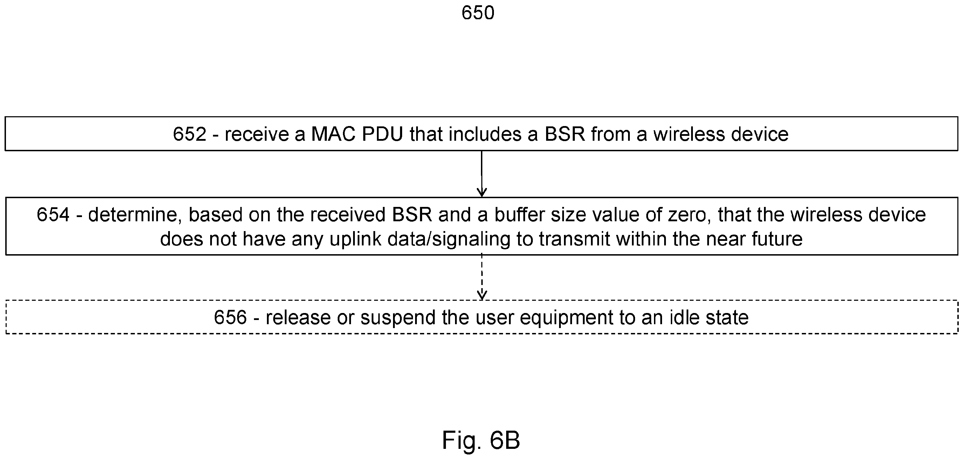

FIGURE 6B is a flow diagram of an example method in a network node of receiving a MAC PDU with a BSR. In particular embodiments, one or more steps of method 650 may be performed by components of wireless network 100 described with reference to FIGURES 1-8B.

Method 650 begins at step 652, where a network node receives a MAC PDU that includes a BSR from a wireless device. For example, as part of a random access procedure or a scheduled transmission, network node 120 may receive, from wireless device 110, a message that includes a MAC PDU that includes a BSR.

At step 612, the network node determines, based on the received BSR and a buffer size value of zero, that the wireless device does not have any uplink data/signaling to transmit within the near future. For example, network node 120 may determine, based on the received BSR, that wireless device 110 does not have any uplink data/signaling to transmit within the near future.

At step 614, the network node network may release or suspend the user equipment to an idle state. For example, network node 120 may release wireless device 110 to an RRC Idle state and thereby save network resources and minimize battery usage for wireless device 110.

Modifications, additions, or omissions may be made to method 650 illustrated in FIGURE 6B. Additionally, one or more steps in method 650 may be performed in parallel or in any suitable order.

FIGURE 7A is a block diagram illustrating an example embodiment of a wireless device. The wireless device is an example of the wireless device 110 illustrated in FIGURE 1.

The wireless device is capable of determining an amount of uplink data for transmission by the wireless device. The wireless device determines a DVI that represents the determined amount of uplink data (e.g., a 4 bit index value). The wireless device encodes the DVI in a MAC PDU using less than one byte and transmits the MAC PDU to a network node. In particular embodiments, encoding the DVI in the MAC PDU may comprise encoding a logical channel identifier (LCID) value in a MAC subheader that indicates the MAC PDU includes a CCCH MAC SDU and a buffer status indicator, such as a DVI. In particular embodiments, encoding the DVI in the MAC PDU may comprise encoding the DVI in a MAC subheader. For example, the wireless device may encode the DVI in the MAC subheader by setting the R or F2 bit to indicate the MAC subheader includes the DVI.

Particular examples of a wireless device include a mobile phone, a smart phone, a PDA (Personal Digital Assistant), a NB-IoT device, a portable computer (e.g., laptop, tablet), a sensor, a modem, a machine type (MTC) device/machine to machine (M2M) device, laptop embedded equipment (LEE), laptop mounted equipment (LME), USB dongles, a device-to-device capable device, a vehicle-to-vehicle device, or any other device that can provide wireless communication. The wireless device includes processing circuitry 700. Processing circuitry 700 includes transceiver 710, processor 720, and memory 730. In some embodiments, transceiver 710 facilitates transmitting wireless signals to and receiving wireless signals from wireless network node 120 (e.g., via an antenna), processor 720 executes instructions to provide some or all of the functionality described herein as provided by the wireless device, and memory 730 stores the instructions executed by processor 720.

Processor 720 includes any suitable combination of hardware and software implemented in one or more integrated circuits or modules to execute instructions and manipulate data to perform some or all of the described functions of the wireless device. In some embodiments, processor 720 may include, for example, one or more computers, one more programmable logic devices, one or more central processing units (CPUs), one or more microprocessors, one or more applications, and/or other logic, and/or any suitable combination of the preceding. Processor 720 may include analog and/or digital circuitry configured to perform some or all of the described functions of wireless device 110. For example, processor 720 may include resistors, capacitors, inductors, transistors, diodes, and/or any other suitable circuit components.

Memory 730 is generally operable to store computer executable code and data. Examples of memory 730 include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or or any other volatile or non-volatile, non-transitory computer-readable and/or computer-executable memory devices that store information.

In particular embodiments, processor 720 in communication with transceiver 710 may encode a DVI in a MAC PDU using less than one byte and transmit the MAC PDU to a network node.

Other embodiments of the wireless device may include additional components (beyond those shown in FIGURE 7A) responsible for providing certain aspects of the wireless device's functionality, including any of the functionality described above and/or any additional functionality (including any functionality necessary to support the solution described above).

FIGURE 7B is a block diagram illustrating example components of a wireless device 110. The components may include determining module 750, encoding module 752, and transmitting module 754.

Determining module 750 may perform the determining functions of wireless device 110. For example, determining module 750 may determine an amount of uplink data for transmission by wireless device 110. Determining module 750 may determine a DVI representing the determined amount of uplink data. In certain embodiments, determining module 750 may include or be included in processor 720. In particular embodiments, determining module 750 may communicate with encoding module 752 and transmitting module 754.

Encoding module 752 may perform the encoding functions of wireless device 110. For example, encoding module 752 may encode the DVI in the MAC PDU according to any of the embodiments described with respect to FIGURES 2-4. In certain embodiments, encoding module 752 may include or be included in processor 720. In particular embodiments, encoding module 752 may communicate with determining module 750 and transmitting module 754.

Transmitting module 754 may perform the transmitting functions of wireless device 110. For example, transmitting module 754 may transmit a MAC PDU to network node 120. In certain embodiments, transmitting module 754 may include or be included in processor 720. In particular embodiments, transmitting module 754 may communicate with determining module 750 and encoding module 752.

FIGURE 8A is a block diagram illustrating an example embodiment of a network node. The network node is an example of the network node 120 illustrated in FIGURE 1.

The network node is capable of receiving a MAC PDU from a wireless device. The MAC PDU includes a DVI representing an amount of uplink data for transmission by the wireless device and the DVI is encoded using less than one byte. The network node decodes the DVI in the MAC PDU to determine an uplink grant based on the decoded DVI. The network node transmits the uplink grant to the wireless device. In particular embodiments, decoding the DVI in the MAC PDU comprises decoding the DVI along with a CCCH MAC SDU. For example, decoding the DVI in the MAC PDU may comprise decoding a logical channel identifier (LCID) value in a MAC subheader that indicates the MAC PDU includes a CCCH MAC SDU and a buffer status indicator, such as a DVI. In particular embodiments, decoding the DVI in the MAC PDU comprises decoding the DVI in a MAC subheader. For example, decoding the DVI in the MAC subheader may comprise inspecting the R or F2 bit to determine the MAC subheader includes the DVI.

Network node 120 can be an eNodeB, a nodeB, a base station, a wireless access point (e.g., a Wi-Fi access point), a low power node, a base transceiver station (BTS), a transmission point or node, a remote RF unit (RRU), a remote radio head (RRH), or other radio access node. Network node 120 includes processing circuitry 800. Processing circuitry 800 includes at least one transceiver 810, at least one processor 820, at least one memory 830, and at least one network interface 840. Transceiver 810 facilitates transmitting wireless signals to and receiving wireless signals from a wireless device, such as wireless devices 110 (e.g., via an antenna); processor 820 executes instructions to provide some or all of the functionality described above as being provided by a network node 120; memory 830 stores the instructions executed by processor 820; and network interface 840 communicates signals to backend network components, such as a gateway, switch, router, Internet, Public Switched Telephone Network (PSTN), controller, and/or other network nodes 120. Processor 820 and memory 830 can be of the same types as described with respect to processor 720 and memory 730 of FIGURE 7A above.

In some embodiments, network interface 840 is communicatively coupled to processor 820 and refers to any suitable device operable to receive input for network node 120, send output from network node 120, perform suitable processing of the input or output or both, communicate to other devices, or any combination of the preceding. Network interface 840 includes appropriate hardware (e.g., port, modem, network interface card, etc.) and software, including protocol conversion and data processing capabilities, to communicate through a network.

In particular embodiments, processor 820 in communication with transceiver 810 receives a MAC PDU that includes a DVI encoded using less than one byte and decodes the DVI to determine an amount of resources to grant the wireless device in an uplink grant.

Other embodiments of network node 120 include additional components (beyond those shown in FIGURE 8A) responsible for providing certain aspects of the network node's functionality, including any of the functionality described above and/or any additional functionality (including any functionality necessary to support the solution described above). The various different types of radio network nodes may include components having the same physical hardware but configured (e.g., via programming) to support different radio access technologies, or may represent partly or entirely different physical components.

FIGURE 8B is a block diagram illustrating example components of a network node 120. The components may include receiving module 850, decoding module 852, and transmitting module 854.

Receiving module 850 may perform the receiving functions of network node 120. For example, receiving module 850 may receive a MAC PDU from wireless device 110. In certain embodiments, receiving module 850 may include or be included in processor 820. Receiving module 850 may include circuitry configured to receive radio signals. In particular embodiments, receiving module 850 may communicate with decoding module 852 and transmitting module 854.

Decoding module 852 may perform the decoding functions of network node 120. For example, decoding module 852 may decode a DVI included in the MAC PDU according to any of the embodiments described with respect to FIGURES 2-4. Decoding module 852 may determine an uplink grant based on the decoded DVI. In certain embodiments, decoding module 852 may include or be included in processor 820. In particular embodiments, decoding module 852 may communicate with receiving module 850 and transmitting module 854.

Transmitting module 854 may perform the transmitting functions of network node 120. For example, transmitting module 854 may transmit an uplink grant to wireless device 110. In certain embodiments, transmitting module 854 may include or be included in processor 820. Transmitting module 854 may include circuitry configured to transmit radio signals. In particular embodiments, transmitting module 854 may communicate with receiving module 850 and decoding module 852.

Some embodiments of the disclosure may provide one or more technical advantages. Some embodiments may benefit from some, none, or all of these advantages. Other technical advantages may be readily ascertained by one of ordinary skill in the art. A technical advantage of some embodiments includes informing a network node about the amount of uplink data/signaling a wireless device has to transmit. Using this information, the network can better determine when to release/suspend the wireless device to an idle state or when the wireless device should be maintained in a connected state. This results in more efficient scheduling which conserves radio resources wireless device battery usage. Other technical advantages may be readily ascertained by one of ordinary skill in the art.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

Abbreviations used in the preceding description include:
- 3GPP: Third Generation Partnership Project
- BSR: Buffer Status Report
- BTS: Base Transceiver Station
- D2D: Device to Device
- DFT: Discrete Fourier Transform
- DL: Downlink
- DRX: Discontinuous Reception
- eNB: eNodeB
- EPDCCH: Enhanced Physical Downlink Control Channel
- FDD: Frequency Division Duplex
- IoT: Internet of Things
- LTE: Long Term Evolution
- M2M: Machine to Machine
- MIMO: Multi-Input Multi-Output
- MPDCCH: MTC Physical Downlink Control Channel
- MSG2: Message 2 received by a UE in the random access procedure
- MSG3: Message 3 sent by the UE in the random access procedure
- MTC: Machine Type Communication
- NB-IoT: Narrowband Internet of Things
- OFDM: Orthogonal Frequency Division Multiplexing
- PCell: Primary Cell
- PDCCH: Physical Downlink Control Channel
- PDSCH: Physical Downlink Shared Channel
- PRB: Physical Resource Block
- PUCCH: Physical Uplink Control Channel
- PUSCH: Physical Uplink Shared Channel
- RA: Random Access
- RAN: Radio Access Network
- RAT: Radio Access Technology
- RI: Rank Indicator
- RRC: Radio Resource Control
- RRH: Remote Radio Head
- RRU: Remote Radio Unit
- SCell: Secondary Cell
- SeNB: Secondary eNodeB
- TDD: Time division duplex
- UE: User Equipment
- UMTS: Universal Mobile Telecommunications System
- WAN: Wireless Access Network

## Claims

1. A method performed by a user equipment for indicating uplink data, the method comprising:
determining (514) a data volume indicator, DVI, representing an amount of uplink data for transmission by the user equipment;
encoding (516) the DVI in a media access control, MAC, protocol data unit. PDU, wherein encoding (516a) the DVI in the MAC PDU comprises:
encoding the DVI with a common control channel, CCCH, MAC service data unit (SDU); and
encoding a logical channel identifier, LCID, value in a MAC subheader of the MAC PDU that indicates that the MAC PDU includes the CCCH MAC SDU and the DVI; and
transmitting (518) the MAC PDU to a network node,
**characterised in that** the DVI includes an amount of data for transmission that is not yet associated with a logical channel.

2. The method of Claim 1, wherein encoding (516) the DVI in the MAC PDU does not include encoding a MAC subheader for the DVI only.

3. The method of any of Claims 1-2, wherein the DVI comprises 4 bits or less.

4. The method of any of Claims 1-3, wherein the DVI relates to a logical channel indicated by the MAC subheader.

5. The method of any of Claims 1-3, wherein the DVI relates to all logical channels for which the user equipment has uplink data for transmission.

6. The method of any of Claims 1-3, wherein the DVI includes an amount of data for transmission associated with logical channels that are not setup.

7. A method performed by a network node for receiving an uplink data indication, the method comprising:
receiving (612) a media access control, MAC, protocol data unit, PDU, from a user equipment, wherein the MAC PDU includes a data volume indicator, DVI, representing an amount of uplink data for transmission by the user equipment;
decoding (614) the DVI in the MAC PDU, wherein decoding (614a) the DVI in the MAC PDU comprises:
decoding the DVI along with a common control channel, CCCH, MAC service data unit, SDU; and
decoding a logical channel identifier, LCID, value in a MAC subheader that indicates that the MAC PDU includes a CCCH MAC SDU and the DVI; and
transmitting (618) an uplink grant to the user equipment based on the decoded DVI,
**characterised in that** the DVI includes an amount of data for transmission that is not yet associated with a logical channel.

8. The method of Claim 7, wherein decoding (614) the DVI in the MAC PDU does not include decoding a MAC subheader for the DVI only.

9. The method of any of Claims 7-8, wherein the DVI relates to a logical channel indicated by the MAC subheader.

10. The method of any of Claims 7-8, wherein the DVI relates to all logical channels for which the user equipment has uplink data for transmission.

11. The method of any of Claims 7-8, wherein the DVI includes an amount of data for transmission associated with logical channels that are not setup.

12. A user equipment (110) for indicating uplink data, the user equipment comprising:
processing circuitry (700) operable to:
determine a data volume indicator, DVI, representing an amount of uplink data for transmission by the user equipment;
encode the DVI in a media access control, MAC, protocol data unit, PDU, (135), wherein the DVI is encoded in the MAC PDU by encoding the DVI with a common control channel, CCCH, MAC service data unit, SDU, and encoding a logical channel identifier, LCID, value in a MAC subheader of the MAC PDU that indicates that the MAC PDU includes the CCCH MAC SDU and the DVI; and
a transceiver (710) operable to transmit the MAC PDU to a network node (120),
**characterised in that** the DVI includes an amount of data for transmission that is not yet associated with a logical channel.

13. The user equipment of Claim 12, wherein the processing circuitry operable to encode the DVI in the MAC PDU does not encode a MAC subheader for the DVI only.

14. The user equipment of any of Claims 12-13, wherein the DVI comprises 4 bits or less.

15. A network node (120) for receiving an uplink data indication, the network node comprising:
processing circuitry (800) operable to:
receive a media access control, MAC, protocol data unit, PDU, (135) from a user equipment (110), wherein the MAC PDU includes a data volume indicator, DVI, representing an amount of uplink data for transmission by the user equipment;
decode the DVI in the MAC PDU, wherein the DVI in the MAC PDU is decoded by decoding the DVI along with a common control channel, CCCH, MAC service data unit, SDU, and decoding a logical channel identifier, LCID, value in a MAC subheader that indicates that the MAC PDU includes a CCCH MAC SDU and the DVI; and
a transceiver (810) operable to transmit an uplink grant to the user equipment based on the decoded DVI,
**characterised in that** the DVI includes an amount of data for transmission that is not yet associated with a logical channel.

## Patentansprüche

1. Verfahren, das von einer Benutzereinrichtung durchgeführt wird, zum Anzeigen von Uplink-Daten, wobei das Verfahren umfasst:
Bestimmen (514) eines Datenvolumenindikators, DVI, der eine Menge von Uplink-Daten zur Übertragung durch eine Benutzereinrichtung darstellt,
Codieren (516) des DVIs in einer Medienzugriffsteuerungs-,MAC-,Protokolldateneinheit, PDU, wobei das Codieren (516a) des DVIs in der MAC-PDU umfasst:
Codieren des DVIs mit einer Zentralsteuerkanal,-CCCH-,MAC-Dienstdateneinheit (SDU); und
Codieren eines Wertes einer Kennung eines logischen Kanals, LCID, in einem MAC-Subheader der MAC-PDU, der anzeigt, dass die MAC-PDU die CCCH-MAC-SDU und den DVI umfasst; und
Senden (518) der MAC-PDU an einen Netzwerkknoten,
**dadurch gekennzeichnet, dass** der DVI eine Menge von Daten zur Übertragung umfasst, die noch nicht mit einem logischen Kanal assoziiert ist.

2. Verfahren nach Anspruch 1, wobei das Codieren (516) des DVIs in der MAC-PDU kein Codieren eines MAC-Subheaders für den DVI allein umfasst.

3. Verfahren nach einem der Ansprüche 1 bis 2, wobei der DVI 4 Bit oder weniger umfasst.

4. Verfahren nach einem der Ansprüche 1 bis 3, wobei der DVI sich auf einen logischen Kanal bezieht, der durch den MAC-Subheader angezeigt wird.

5. Verfahren nach einem der Ansprüche 1 bis 3, wobei der DVI sich auf alle logischen Kanäle bezieht, für welche die Benutzereinrichtung Uplink-Daten zur Übertragung aufweist.

6. Verfahren nach einem der Ansprüche 1 bis 3, wobei der DVI eine Menge von Daten zur Übertragung umfasst, die mit logischen Kanälen assoziiert ist, die nicht festgelegt sind.

7. Verfahren, das von einem Netzwerkknoten durchgeführt wird, zum Empfangen einer Uplink-Datenanzeige, wobei das Verfahren umfasst:
Empfangen (612) einer Medienzugriffssteuerungs-,MAC-,Protokolldateneinheit, PDU, von einer Benutzereinrichtung, wobei die MAC-PDU einen Datenvolumenindikator, DVI, umfasst, der eine Menge von Daten zur Übertragung durch die Benutzereinrichtung darstellt;
Decodieren (614) des DVIs in der MAC-PDU, wobei das Decodieren (614a) des DVIs in der MAC-PDU umfasst:
Decodieren des DVIs zusammen mit einer Zentralsteuerkanal,-CCCH-,MAC-Dienstdateneinheit, SDU; und
Decodieren eines Wertes einer Kennung eines logischen Kanals, LCID, in einem MAC-Subheader der MAC-PDU, der anzeigt, dass die MAC-PDU eine CCCH-MAC-SDU und den DVI umfasst; und
Senden (618) einer Uplink-Freigabe an die Benutzereinrichtung basierend auf dem decodierten DVI,
**dadurch gekennzeichnet, dass** der DVI eine Menge von Daten zur Übertragung umfasst, die noch nicht mit einem logischen Kanal assoziiert ist.

8. Verfahren nach Anspruch 7, wobei das Decodieren (614) des DVIs in der MAC-PDU kein Codieren eines MAC-Subheaders für den DVI allein umfasst.

9. Verfahren nach einem der Ansprüche 7 bis 8, wobei der DVI sich auf einen logischen Kanal bezieht, der durch den MAC-Subheader angezeigt wird.

10. Verfahren nach einem der Ansprüche 7 bis 8, wobei der DVI sich auf alle logischen Kanäle bezieht, für welche die Benutzereinrichtung Uplink-Daten zur Übertragung aufweist.

11. Verfahren nach einem der Ansprüche 7 bis 8, wobei der DVI eine Menge von Daten zur Übertragung umfasst, die mit logischen Kanälen assoziiert ist, die nicht festgelegt sind.

12. Benutzereinrichtung (110) zum Anzeigen von Uplink-Daten, wobei Benutzereinrichtung, umfasst:
Verarbeitungsschaltungsanordnung (700), die ausgelegt ist zum:
Bestimmen eines Datenvolumenindikators, DVI, der eine Menge von Uplink-Daten zur Übertragung durch eine Benutzereinrichtung darstellt,
Codieren des DVIs in einer Medienzugriffsteuerungs-,MAC-,Protokolldateneinheit, PDU, (135), wobei der DVI in der MAC-PDU durch Codieren des DVIs mit einer Zentralsteuerkanal,-CCCH-,MAC-Dienstdateneinheit, SDU, codiert wird und Codieren eines Wertes einer Kennung eines logischen Kanals, LCID, in einem MAC-Subheader der MAC-PDU, der anzeigt, dass die MAC-PDU eine CCCH-MAC-SDU und den DVI umfasst; und
einen Sender (710), der zum Senden der MAC-PDU an einen Netzwerkknoten (120) ausgelegt ist,
**dadurch gekennzeichnet, dass** der DVI eine Menge von Daten zur Übertragung umfasst, die noch nicht mit einem logischen Kanal assoziiert ist.

13. Benutzereinrichtung nach Anspruch 12, wobei die Verarbeitungsschaltungsanordnung so ausgelegt ist, dass das Codieren des DVIs in der MAC-PDU nicht einen MAC-Subheader für den DVI allein codiert.

14. Benutzereinrichtung nach einem der Ansprüche 12 bis 13, wobei der DVI 4 Bit oder weniger umfasst.

15. Netzwerkknoten (120) zum Empfangen einer Uplink-Datenanzeige, wobei der Netzwerkknoten umfasst:
Verarbeitungsschaltungsanordnung (800), die ausgelegt ist zum:
Empfangen einer Medienzugriffssteuerungs-,MAC-,Protokolldateneinheit, PDU, (135) von einer Benutzereinrichtung (110), wobei die MAC-PDU einen Datenvolumenindikator, DVI, umfasst, der eine Menge von Daten zur Übertragung durch die Benutzereinrichtung darstellt;
Decodieren des DVIs in er MAC-PDU, wobei der DVI in der MAC-PDU durch Decodieren des DVIs zusammen mit einer Zentralsteuerkanal,-CCCH-,MAC-Dienstdateneinheit, SDU, decodiert wird, und Decodieren eines Wertes einer Kennung eines logischen Kanals, LCID, in einem MAC-Subheader der MAC-PDU, der anzeigt, dass die MAC-PDU eine CCCH-MAC-SDU und den DVI umfasst; und
einen Sender (810), der zum Senden einer Uplink-Freigabe an die Benutzereinrichtung basierend auf dem decodierten DVI ausgelegt ist,
**dadurch gekennzeichnet, dass** der DVI eine Menge von Daten zur Übertragung umfasst, die noch nicht mit einem logischen Kanal assoziiert ist.

## Revendications

1. Procédé réalisé par un équipement d'utilisateur pour indiquer des données de liaison montante, le procédé comprenant :
la détermination (514) d'un indicateur de volume de données, DVI, représentant une quantité de données de liaison montante pour une transmission par l'équipement d'utilisateur ;
le codage (516) du DVI dans une unité de données de protocole, PDU, de commande d'accès au support, MAC, dans lequel le codage (516a) du DVI dans la PDU MAC comprend :
le codage du DVI avec une unité de données de service (SDU) MAC de canal de commande commun, CCCH ; et
le codage d'une valeur d'identifiant de canal logique, LCID, dans un sous-en-tête MAC de la PDU MAC qui indique que la PDU MAC inclut la SDU MAC CCCH et le DVI ; et
la transmission (518) de la PDU MAC à un nœud de réseau,
**caractérisé en ce que** le DVI inclut une quantité de données pour une transmission qui n'est pas encore associée à un canal logique.

2. Procédé selon la revendication 1, dans lequel le codage (516) du DVI dans la PDU MAC n'inclut pas le codage d'un sous-en-tête MAC uniquement pour le DVI.

3. Procédé selon l'une quelconque des revendications 1 et 2, dans lequel le DVI comprend 4 bits ou moins.

4. Procédé selon l'une quelconque des revendications 1 à 3, dans lequel le DVI est relatif à un canal logique indiqué par le sous-en-tête MAC.

5. Procédé selon l'une quelconque des revendications 1 à 3, dans lequel le DVI est relatif à tous les canaux logiques pour lesquels l'équipement d'utilisateur a des données de liaison montante pour une transmission.

6. Procédé selon l'une quelconque des revendications 1 à 3, dans lequel le DVI inclut une quantité de données pour une transmission associée à des canaux logiques qui ne sont pas configurés.

7. Procédé réalisé par un nœud de réseau pour recevoir une indication de données de liaison montante, le procédé comprenant :
la réception (612) d'une unité de données de protocole, PDU, de commande d'accès au support, MAC, depuis un équipement d'utilisateur, dans lequel la PDU MAC inclut un indicateur de volume de données, DVI, représentant une quantité de données de liaison montante pour une transmission par l'équipement d'utilisateur ;
le décodage (614) du DVI dans la PDU MAC, dans lequel le décodage (614a) du DVI dans la PDU MAC comprend :
le décodage du DVI avec une unité de données de service, SDU, MAC de canal de commande commun, CCCH ; et
le décodage d'une valeur d'identifiant de canal logique, LCID, dans un sous-en-tête MAC qui indique que la PDU MAC inclut une SDU MAC CCCH et le DVI ; et
la transmission (618) d'un octroi de liaison montante à l'équipement d'utilisateur sur la base du DVI décodé,
**caractérisé en ce que** le DVI inclut une quantité de données pour une transmission qui n'est pas encore associée à un canal logique.

8. Procédé selon la revendication 7, dans lequel le décodage (614) du DVI dans la PDU MAC n'inclut pas le décodage d'un sous-en-tête MAC uniquement pour le DVI.

9. Procédé selon l'une quelconque des revendications 7 et 8, dans lequel le DVI est relatif à un canal logique indiqué par le sous-en-tête MAC.

10. Procédé selon l'une quelconque des revendications 7 et 8, dans lequel le DVI est relatif à tous les canaux logiques pour lesquels l'équipement d'utilisateur a des données de liaison montante pour une transmission.

11. Procédé selon l'une quelconque des revendications 7 et 8, dans lequel le DVI inclut une quantité de données pour une transmission associée à des canaux logiques qui ne sont pas configurés.

12. Equipement d'utilisateur (110) pour indiquer des données de liaison montante, l'équipement d'utilisateur comprenant :
une circuiterie de traitement (700) utilisable pour :
déterminer un indicateur de volume de données, DVI, représentant une quantité de données de liaison montante pour une transmission par l'équipement d'utilisateur ;
coder le DVI dans une unité de données de protocole, PDU, de commande d'accès au support, MAC, (135), dans lequel le DVI est codé dans la PDU MAC par le codage du DVI avec une unité de données de service, SDU, MAC de canal de commande commun, CCCH, et le codage d'une valeur d'identifiant de canal logique, LCID, dans un sous-en-tête MAC de la PDU MAC qui indique que la PDU MAC inclut la SDU MAC CCCH et le DVI ; et
un émetteur-récepteur (710) utilisable pour transmettre la PDU MAC à un nœud de réseau (120),
**caractérisé en ce que** le DVI inclut une quantité de données pour une transmission qui n'est pas encore associée à un canal logique.

13. Equipement d'utilisateur selon la revendication 12, dans lequel la circuiterie de traitement utilisable pour coder le DVI dans la PDU MAC ne code pas un sous-en-tête MAC uniquement pour le DVI.

14. Equipement d'utilisateur selon l'une quelconque des revendications 12 et 13, dans lequel le DVI comprend 4 bits ou moins.

15. Nœud de réseau (120) pour recevoir une indication de données de liaison montante, le nœud de réseau comprenant :
une circuiterie de traitement (800) utilisable pour :
recevoir une unité de données de protocole, PDU, de commande d'accès au support, MAC, (135) depuis un équipement d'utilisateur (110), dans lequel la PDU MAC inclut un indicateur de volume de données, DVI, représentant une quantité de données de liaison montante pour une transmission par l'équipement d'utilisateur ;
décoder le DVI dans la PDU MAC, dans lequel le DVI dans la PDU MAC est décodé par le décodage du DVI avec une unité de données de service, SDU, MAC de canal de commande commun, CCCH, et le décodage d'une valeur d'identifiant de canal logique, LCID, dans un sous-en-tête MAC qui indique que la PDU MAC inclut une SDU MAC CCCH et le DVI ; et
un émetteur-récepteur (810) utilisable pour transmettre un octroi de liaison montante à l'équipement d'utilisateur sur la base du DVI décodé,
**caractérisé en ce que** le DVI inclut une quantité de données pour une transmission qui n'est pas encore associée à un canal logique.
